# EUROPÄISCHE PATENTSCHRIFT

(11) **EP 3 638 612 B1**
(45) Veröffentlichungstag und Bekanntmachung des Hinweises auf die Patenterteilung: **03.05.2023**
(21) Anmeldenummer: 18735508.6
(22) Anmeldetag: 13.06.2018
(51) Int. Cl.: B66F 7/06, B66F 9/19, B65G 67/04

(54) **LADEKOPF UND VERFAHREN ZUM UMLADEN VON LADUNGSEINHEITEN**
LOADING HEAD AND METHOD FOR TRANSFERRING LOAD UNITS
TÊTE DE CHARGEMENT ET PROCÉDÉ DE TRANSBORDEENT D'UNITÉS DE CHARGEMENT

(30) Priorität: 14.06.2017 DE 102017113181
(43) Veröffentlichungstag der Anmeldung: 22.04.2020
(73) Patentinhaber: Haver & Boecker OHG, 59302 Oelde (DE)
(72) Erfinder: ST VESAND, Bernhard, 59320 Ennigerloh (DE)
(74) Vertreter: BSB Patentanwälte Schütte & Engelen Partnerschaft mbB
(86) Internationale Anmeldenummer: PCT/EP2018/065711
(87) Internationale Veröffentlichungsnummer: WO 2018/229154

(56) Entgegenhaltungen:
- WO-A2-2015/124750
- US-A- 3 381 834
- US-A- 4 619 579

## Beschreibung

Die vorliegende Erfindung betrifft eine Vorrichtung und ein Verfahren zum Umladen von Ladungseinheiten und insbesondere zur Aufnahme und/oder Abgabe von Ladungseinheiten bei einem Ladungsvorgang.

Beispielsweise kann eine solche Vorrichtung bei der Beladung von Transportmitteln wie Lastkraftwagen, Schiffen, Rollenbahnen oder Schienenfahrzeugen oder dergleichen eingesetzt werden, um zu Sackstapeln palettierte Säcke als Ladungseinheiten auf der Ladefläche des Transportmittels gezielt abzulegen.

Derartige Vorrichtungen sind im Stand der Technik bekannt geworden. Dabei werden beispielsweise Säcke zu einem Sackstapel gepackt und auf eine Palette aufgebracht. Die Palette wird dann zusammen mit dem Sackstapel auf dem Transportmittel abgestellt. Ein Nachteil einer solchen Vorrichtung ist, dass die Paletten mit verladen und anschließend wegtransportiert werden müssen. Es müssen also ständig neue Paletten nachgeliefert oder aber im Kreislauf wieder von dem Kunden zurückgeführt werden.

Mit der DE 691 00 158 T2 ist eine Vorrichtung mit einer Greif-und Übertragungszange bekannt geworden, bei der Stapel von Etiketten automatisch gegriffen und in einer anderen Position abgelegt werden können. Zur Aufnahme eines Stapels von Etiketten wird von oben Druck auf den elastischen Untergrund ausgeübt, sodass der Untergrund lokal nachgibt und eine untere Abstützplatte unter den Etikettenstapel geschoben werden kann. Die bekannte Vorrichtung funktioniert bei der Verarbeitung von Etikettenstapeln. Eine Übernahme von Sackstapeln von einer Palette ist damit nicht möglich, da eine zur Aufnahme eines Sackstapels zu unterschiebende Abstützplatte die untersten Säcke zerstören könnte. Somit könnten Sackstapel nur mit Paletten verladen werden, da diese keinen elastischen Untergrund bieten.

Es sind deshalb mit der DE 10 2014 102 165 A1 und der WO 2015/124750 A2 eine Vorrichtung und ein Verfahren zum Umladen von Sackstapeln bekannt geworden, wobei ein Ladekopf einer Ladeeinrichtung zur Aufnahme und/oder Abgabe von - Sackstapeln eingesetzt wird. Der Ladekopf umfasst eine Auflageeinrichtung mit wenigstens einem flächigen Auflageteil und einer daran ausgebildeten Stützfläche, um die Sackstapel wenigstens zeitweise bei dem Ladevorgang wenigstens von unten mittels der Stützfläche des Auflageteils zu stützen. Der Ladekopf weist eine quer zu der Stützfläche des Auflageteils ausgerichtete Rückhaltefläche einer Rückhalteeinrichtung auf und das Auflageteil ist an dem Ladekopf gegenüber der Rückhalteeinrichtung beweglich aufgenommen, um durch ein Zurückbewegen des Auflageteils gegenüber der Rückhalteeinrichtung die Sackstapel von dem Ladekopf abzugeben. Damit kann ein Sackstapel von dem Auflageteil des Ladekopfes abgestreift werden, sodass der Sackstapel ohne eine darunter angeordnete Palette auf einer Ladefläche beispielsweise eines Lastkraftwagens abgesetzt wird.

Mit der bekannten Vorrichtung und der in der WO 2015/124750 A2 offenbarten Anlage ist es möglich, innerhalb der Anlage sogenannte In-House-Paletten bzw. Transportpaletten zu verwenden, die hochwertig gefertigt sind und die die Anlage nicht verlassen. Transportmittel zum Transport von Sackstapeln werden palettenlos beladen, d.h., dass die Sackstapel werden direkt auf die Ladefläche des Transportmittels abgesetzt.

Die bekannte Vorrichtung und das bekannte Verfahren funktionieren sehr zufriedenstellend, insbesondere wenn zum Beispiel Lastkraftwagen beladen werden sollen, die anschließend beim Einzelhandel oder beim Endkunden per Hand abgeladen werden.

Es wird im Markt aber auch gewünscht, dass zum Beispiel bedarfsweise Ladungseinheiten und insbesondere Sackstapel nicht nur direkt auf einer Ladefläche eines Transportmittels abgesetzt werden, sondern dass z.B. wahlweise auch Transportmittel mit Sackstapeln auf Ladungsträgern wie Paletten beladen werden, um diese alternativ z.B. mit Gabelstaplern abnehmen zu können. Aus der US 3,381,834 A ist ein Gabelstapler mit einer Abstreiflippe bekannt. US 3 381 834 A offenbart einen Ladekopf zur Aufnahme und/oder Aufgabe einer Ladungseinheit nach dem Oberbegriff des Anspruchs 1 sowie ein Verfahren zum Beladen eines Transportmittels mit Ladungseinheiten mittels eines Ladekopfs nach dem Oberbegriff des Anspruchs 11.

Es ist deshalb die Aufgabe der vorliegenden Erfindung, eine Vorrichtung und ein Verfahren zur Verfügung zu stellen, womit wahlweise oder wenigstens bedarfsweise Transportmittel mit Ladungseinheiten auf einem Ladungsträger (wie einer Palette) beladen werden.

Diese Aufgabe wird gelöst durch eine Vorrichtung mit den Merkmalen des Anspruchs 1 und durch ein Verfahren mit den Merkmalen des Anspruchs 11. Bevorzugte Weiterbildungen der Erfindung sind Gegenstand der Unteransprüche. Weitere Vorteile und Merkmale der vorliegenden Erfindung ergeben sich aus den Ausführungsbeispielen.

Ein erfindungsgemäßer Ladekopf zur Aufnahme und/oder Abgabe einer Ladungseinheit bei einem Ladevorgang umfasst eine Trägereinrichtung und wenigstens eine daran aufgenommene Auflageeinrichtung mit wenigstens einem Auflageteil mit wenigstens einer Stützfläche. Dabei ist die Auflageeinrichtung dazu vorgesehen und ausgebildet, die Ladungseinheit wenigstens zeitweise bei dem Ladevorgang wenigstens von unten mittels der Stützfläche des Auflageteils zu stützen. An der Trägereinrichtung ist (wenigstens) eine Rückhalteeinrichtung mit einer quer zu der Stützfläche des Auflageteils ausgerichteten Rückhaltefläche aufgenommen. Das Auflageteil oder wenigstens ein Auflageteil ist insbesondere in einer Längsrichtung (und/oder z. B. in einer Querrichtung) des Ladekopfes gegenüber der (jeweiligen) Rückhalteeinrichtung beweglich, um durch ein Zurückbewegen des Auflageteils gegenüber der Rückhalteeinrichtung die Ladungseinheit von dem Ladekopf abzugeben und an eine Ladefläche eines separaten Transportmittels zu übergeben. Wenigstens eine Mitnehmereinrichtung mit wenigstens einem Mitnehmer ist an der Trägereinrichtung vorgesehen und insbesondere befestigt oder ausgebildet, wobei die Mitnehmereinrichtung insgesamt oder teilweise höhenverstellbar ist und dazu geeignet und ausgebildet ist, bei einer Bewegung des Beladekopfes einen transportablen Ladungsträger auf der Ladefläche des Transportmittels auszurichten, auf dem eine Ladungseinheit abzusetzen ist um wahlweise die Ladungseinheit auf einem mit dem Beladekopf ausgerichteten transportablen Ladungsträger der Ladefläche des Transportmittels abzusetzen. Ein solcher Ladungsträger kann insbesondere als Palette ausgestaltet sein.

Vorzugsweise ist es wahlweise auch möglich, die Ladungseinheit z. B. direkt und mittelbar oder unmittelbar auf der Ladefläche des Transportmittels abzusetzen. Dann wird ein Ladungsträger wie z. B. eine Palette an dem Transportmittel wie z. B. einem Lastkraftwagen nicht benötigt und nicht eingesetzt.

Die Erfindung hat viele Vorteile. Ein erheblicher Vorteil des erfindungsgemäßen Ladekopfes besteht darin, dass der Ladekopf dazu geeignet und ausgebildet ist, beispielsweise eine Palette auf einer Ladefläche eines Transportmittels definiert auszurichten. Dadurch wird es möglich, auf dem auf der Ladefläche ausgerichteten Ladungsträger eine Ladungseinheit wie insbesondere einen Sackstapel abzusetzen. Es ist aber auch möglich, eine Ladungseinheit wie einen Sackstapel direkt auf der Ladefläche eines Transportmittels abzusetzen. So bestehen beide Möglichkeiten. Es ist sowohl möglich, eine Ladefläche eines Transportmittels palettenlos mit Sackstapeln zu beladen. Es ist auch möglich, eine Ladefläche eines Transportmittels, die mit separaten Paletten als Trägereinrichtungen bestückt wird, mit Ladungseinheiten zu beladen. Darüber wird es
ermöglicht, palettenlose Sackstapel auf Paletten auf einer Ladefläche eines Transportmittels abzusetzen. Durch die definierte Ausrichtung eines transportablen Ladungsträgers wie einer Palette auf der Ladefläche des Transportmittels kann eine definierte Beladung des Transportmittels erfolgen, sodass eine räumlich dichte Beladung erreicht wird. Der Ladekopf ist insbesondere beweglich.

Die Erfindung ermöglicht die Verladung auf Einwegpaletten z. B. in Ländern, in denen es kein Umlaufpalettenpool (Palettenpool) bzw. Pfandsystem für Paletten gibt.

Die vorliegende Erfindung bildet die aus der WO 2015/124750 A2 bekannte Vorrichtung weiter und ermöglicht somit eine "palettenlose" Beladung von Sackstapeln auf Paletten.

In bevorzugten Weiterbildungen der vorliegenden Erfindung kann die Vorrichtung eines oder mehrere Merkmale aus der WO 2015/124750 A2 aufweisen. Wesentlich dabei ist, dass an dem Ladekopf wenigstens eine Mitnehmereinrichtung mit wenigstens einem Mitnehmer vorgesehen ist, wobei die Mitnehmereinrichtung dazu geeignet und ausgebildet ist, bei einer Bewegung des Beladekopfes einen transportablen Ladungsträger wie eine Palette auszurichten, um auf dem Ladungsträger eine Ladungseinheit abzusetzen.

Es ist in allen Ausgestaltungen möglich und bevorzugt, dass wenigstens eine Ladungseinheit an die Ladefläche übergeben wird bzw. übergebbar ist. Möglich ist es aber z. B. auch zwei (oder auch mehr) Ladungseinheiten gleichzeitig an die Ladefläche zu übergeben. Der Ladungsträger fasst vorzugsweise eine Ladungseinheit oder einen Sackstapel. Denkbar ist es auch, dass der Ladungsträger zwei oder mehr Ladungseinheiten oder Sackstapel fassen kann.

Unter einer Ladungseinheit wird ein Gegenstand oder eine Einheit verstanden, der bzw. die die Fläche eines transportablen Ladungsträgers definiert ausfüllt. Vorzugsweise ist eine Ladungseinheit ein Sackstapel (oder auch ein Kartonstapel oder dergleichen), der die die Fläche eines transportablen Ladungsträgers flächig oder seitlich überstehend oder überstapelt ausfüllt. Die Ladungseinheiten können sich dann gegenseitig abstützen. Dadurch wird eine bessere Stabilität beim Transport ermöglicht.

In einer bevorzugten Weiterbildung der Erfindung steht der Mitnehmer in einer Mitnehmerposition nach unten über die Auflageeinrichtung über. Dabei ist es möglich, dass der Mitnehmer statisch nach unten über die Auflageeinrichtung übersteht. Möglich ist es, dass die Mitnehmereinrichtung und/oder wenigstens ein Mitnehmer fest mit der Trägereinrichtung verbunden ist. Auch eine einstückige Ausgestaltung ist möglich.

Vorzugsweise steht eine untere Kante des Mitnehmers wenigstens um einen (definierten) Höhenversatz nach unten über das untere Ende des Auflageteils über, wobei der Höhenversatz wenigstens die dreifache oder fünffache oder zehnfache Dicke des Auflageteils beträgt. Möglich ist es auch, dass der Höhenversatz der fünfzehnfachen oder zwanzigfachen Dicke des Auflageteils entspricht.

Besonders bevorzugt steht eine untere Kante des Mitnehmers wenigstens um 2 cm oder 3 cm oder 5 cm oder 7 cm oder 10 cm oder 15 cm über das untere Ende des Auflageteils über. Das gilt insbesondere dann, wenn sich der Mitnehmer in der Mitnehmerposition befindet. Wenn der Mitnehmer statisch angebracht ist, befindet sich der Mitnehmer immer in der Mitnehmerposition, außer wenn er manuell demontiert wird, wenn das möglich ist.

Nach der Erfindung ist die Mitnehmereinrichtung insgesamt oder teilweise höhenverstellbar. Möglich und bevorzugt ist es, dass der Mitnehmer der Mitnehmereinrichtung bzw. wenigstens ein Mitnehmer der Mitnehmereinrichtung höhenverstellbar ausgebildet ist. Der Mitnehmer kann per Hand manuell höhenverstellbar sein. Möglich und bevorzugt ist es auch, dass der Mitnehmer automatisch höhenverstellbar ist. Beispielsweise kann eine Höhenverstellung motorisch oder pneumatisch oder hydraulisch oder magnetisch oder durch Federkraft oder dergleichen erfolgen.

In bevorzugten Ausgestaltungen ist die Mitnehmereinrichtung an der Trägereinrichtung aufgenommen und insbesondere befestigt.

Vorzugsweise ist eine Länge des Mitnehmers in Längsrichtung des Ladekopfes kürzer als 10 cm oder 5 cm oder 4 cm oder 3 cm oder 2 cm. Die Länge des Mitnehmers in Längsrichtung des Ladekopfes kann auch kürzer als 1,5 cm oder 1 cm betragen. Ein in Längsrichtung kürzerer Mitnehmer ermöglicht das Eintauchen des Mitnehmers in einen undefinierten kurzen Spalt zwischen zwei Ladungsträgern und ermöglicht auch dann noch eine zuverlässige Positionierung eines Ladungsträgers. Eine Breite des Mitnehmers in Querrichtung quer zu der Längsrichtung kann unterschiedlich sein. Möglich ist eine Breite von z. B. 1 cm oder auch eine Breite, die sich über die vollständige Breite des Auflageteils oder der Auflageeinrichtung erstreckt.

Vorzugsweise ist an der Trägereinrichtung wenigstens ein Niederhalter ausgebildet, der über das untere Ende des Auflageteils nach unten übersteht. Ein solcher Niederhalter kann beispielsweise als Druckschuh ausgebildet sein und auch als Druckschuh bezeichnet werden. Insbesondere auf nicht ebenen Ladeflächen eines Transportmittels bietet ein solcher Niederhalter oder Druckschuh erhebliche Vorteile. Der Niederhalter kann auf dem nächsten Ladungsträger bzw. der nächsten Palette positioniert werden und den Ladungsträger nach unten drücken, damit beim Zurückbewegen des Auflageteils das Auflageteil nicht gegen eine Kante des nächsten Ladungsträgers anstößt. Das Auflageteil wird an einer Führung an der Trägereinrichtung abgestützt. Die Führung kann an der innenliegenden Seite des Druckschuhs gleitend ausgebildet sein. Das ermöglicht eine zuverlässige Beladung von Ladeflächen von Transportmitteln, auch wenn ein solches unebene Oberflächen aufweist.

In bevorzugten Weiterbildungen umfasst die Mitnehmereinrichtung vorzugsweise wenigstens zwei oder mehr fingerartige Mitnehmer. Möglich ist es auch, dass die Mitnehmereinrichtung einen langgezogenen Mitnehmer mit wenigstens einer Mitnehmerkante umfasst.

Die Mitnehmereinrichtung umfasst vorzugsweise wenigstens eine oder auch mehr Mitnehmerkanten. Eine Mitnehmerkante kann insbesondere am vorderen Ende des Mitnehmers und am hinteren Ende des Mitnehmers ausgebildet sein, um einen Ladungsträger oder eine Palette nach vorne oder nach hinten hin auszurichten. Möglich ist es auch, seitliche Mitnehmer vorzusehen, die beispielsweise auch höhenverstellbar sein können, um einen Ladungsträger in seitlicher Richtung auszurichten. Es ist auch möglich, über einen Mitnehmer einen Ladungsträger in Längs- und Querrichtung auszurichten. Es ist auch möglich, einen statischen Mitnehmer an den Enden V-förmig auszubilden, um eine gleichzeitige Ausrichtung in Längs- und Querrichtung zu ermöglichen.

In einer konkreten Ausgestaltung wird der Ladekopf zur Aufnahme und/oder Abgabe von Sackstapeln bei einem Ladevorgang eingesetzt. Der Ladekopf umfasst dann eine Trägereinrichtung und wenigstens eine daran aufgenommene Auflageeinrichtung mit wenigstens einem Auflageteil mit einer Stützfläche, wobei die Auflageeinrichtung dazu vorgesehen und ausgebildet ist, einen Sackstapel wenigstens zeitweise bei dem Ladevorgang wenigstens von unten mittels der Stützfläche des Auflageteils zu stützen, wobei an der Trägereinrichtung wenigstens eine Rückhalteeinrichtung mit einer quer zu der Stützfläche des Auflageteils ausgerichteten Rückhaltefläche aufgenommen ist, und wobei das Auflageteil des Ladekopfes gegenüber der Rückhalteeinrichtung beweglich ist, um durch ein Zurückbewegen des Auflageteils gegenüber der Rückhalteeinrichtung den Sackstapel von dem Ladekopf abzugeben und an eine Ladefläche eines separaten Transportmittels zu übergeben. Es ist wenigstens eine Mitnehmereinrichtung mit wenigstens einem Mitnehmer an der Trägereinrichtung vorgesehen, welche dazu geeignet und ausgebildet ist, bei einer Bewegung des Beladekopfes einen transportablen Ladungsträger auf der Ladefläche des Transportmittels auszurichten, auf dem der Sackstapel abzusetzen ist, um wahlweise den Sackstapel auf dem mit dem Beladekopf ausgerichteten transportablen Ladungsträger auf der Ladefläche des Transportmittels abzusetzen. Insbesondere ist es auch wahlweise möglich, den Sackstapel z. B. direkt und unmittelbar (oder mittelbar) auf der Ladefläche des Transportmittels abzusetzen.

Das erfindungsgemäße Verfahren dient zum Beladen eines Transportmittels mit Ladungseinheiten mittels eines insbesondere beweglichen Ladekopfes, wobei der Ladekopf an einer Trägereinrichtung gehalten wird und wobei eine Ladeeinheit auf einer Stützfläche eines Auflageteils der Auflageeinrichtung positioniert ist. Das Auflageteil wird gegenüber einer an der Trägereinrichtung aufgenommenen Rückhalteeinrichtung zurückbewegt, um durch ein Zurückbewegen des Auflageteils gegenüber der Rückhalteeinrichtung die Ladungseinheit von dem Ladekopf abzugeben und an eine Ladefläche eines separaten Transportmittels zu übergeben. Vor Abgabe der Ladungseinheit wird mit einer an dem Ladekopf ausgebildeten Mitnehmereinrichtung, welche insgesamt oder teilweise höhenverstellbar ist, wahlweise ein zuvor manuell oder mit einem zusätzlichen Transport aufgelegter transportabler Ladungsträger auf einer Ladefläche des Transportmittels ausgerichtet, um wahlweise die Ladungseinheit auf einem mit dem Beladekopf auf der Ladefläche des Transportmittels ausgerichteten transportablen Ladungsträger abzusetzen.

Dabei kann die Ausrichtung eines transportablen Ladungsträgers wie beispielsweise einer Palette erfolgen, während auf der Ladeeinheit bzw. den Ladeeinheiten des Ladekopfes eine Ladungseinheit oder ein Sackstapel (oder auch 2 Sackstapel) angeordnet sind. Es ist auch möglich und bevorzugt, dass eine Ausrichtung eines oder mehrerer Ladungsträger auf der Ladefläche des Transportmittels erfolgt, bevor die Beladung der Ladefläche mit Ladungseinheiten wie Sackstapeln erfolgt. Beispielsweise kann ein Fahrer eines Lastkraftwagens als Transportmittel die benötigte Anzahl von Paletten grob auf der Ladefläche ablegen. Eine genaue Ausrichtung der Paletten erfolgt dann anschließend beim Beladen mit den Sackstapeln. Durch das Ausrichten der Paletten auf der Ladefläche kann eine dichte Packung der Ladefläche des Transportmittels gewährleistet werden. Insbesondere bei überstapelten Ladungseinheiten, also Ladungseinheiten, die seitlich längs oder quer über die Palette hinausstehen, können die Paletten nicht auf Stoß (dicht) aufgelegt und ausgerichtet werden. Es muss die Überstapelung berücksichtigt werden, damit die Ladungseinheiten dicht gepackt werden können.

In bevorzugten Weiterbildungen wird die Mitnehmereinrichtung insgesamt oder es wird wenigstens ein Mitnehmer der Mitnehmereinrichtung vor der Ausrichtung ausgefahren.

Vorzugsweise wird der Ladungsträger durch eine Bewegung des Ladekopfes in Längsrichtung nach vorn geschoben und/oder zurückgezogen. Möglich ist es auch, dass der Ladungsträger durch eine seitliche Bewegung des Ladekopfes ausgerichtet wird.

Vorzugsweise wird vor dem Zurückbewegen des Auflageteils und dem Beladen eines Ladungsträger mit einer Ladungseinheit ein Niederhalter auf den nächsten Ladungsträger abgesenkt. Dadurch kann sichergestellt werden, dass beim Zurückziehen eines Auflageteils das Auflageteil nicht gegen den nächsten Ladungsträger anstößt. Dadurch wird eine zuverlässige Funktion gewährleistet. Der Niederhalter ist insbesondere direkt an der Trägereinrichtung ausgebildet und kann durch einen unteren Teil der Trägereinrichtung gebildet werden.

In allen Ausgestaltungen und Weiterbildungen der Erfindung können Sackstapel verladen werden. Möglich ist es auch, einzelne Sacklagen oder Lagenbilder von Säcken zu verladen. So können z. B. ein oder zwei Sacklagen von jeweils z. B. 5 Säcken in einem Vorgang auf einem Transportmittel abgelegt werden. In einem nächsten Schritt kann eine zweite Lage von Säcken (wieder z. B. zwei Lagenbilder) darauf abgelegt werden. Bei der Beladung von Lastkraftwagen werden vorzugsweise mit einem Vorgang ein oder zwei Ladungseinheiten gleichzeitig abgesetzt.

Weitere Vorteile und Merkmale der vorliegenden Erfindung ergeben sich aus den Ausführungsbeispielen, die mit Bezug auf die beiliegenden Figuren im Folgenden erläutert werden.

In den Figuren zeigen:
- Figur 1: eine Seitenansicht auf eine Vorrichtung zum Verladen von Ladungseinheiten;
- Figur 2: eine schematische vergrößerte Seitenansicht einer mit Paletten versehenen Ladefläche und einem Ladekopf zum Ausrichten der Paletten und Ablegen von Ladungseinheiten wie Sackstapeln auf den Paletten auf der Ladefläche;
- Figur 3: eine perspektivische Ansicht eines Ladekopfes für die Vorrichtung nach Figur 1;
- Figur 4: eine Seitenansicht des Ladekopfes nach Figur 3;
- Figur 5: eine Draufsicht auf eine weitere Ausführungsform eines Ladekopfes für die Vorrichtung nach Figur 1;
- Figur 6: eine schematische Seitenansicht des Ladekopfes nach Figur 5.

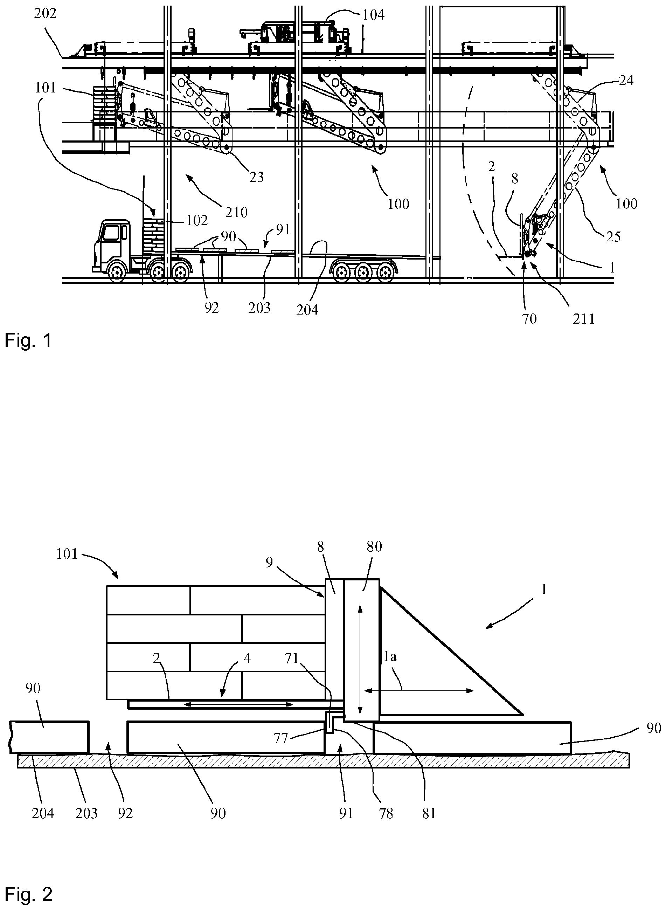

In Figur 1 ist stark schematisch eine Seitenansicht einer Anlage dargestellt, die zum Verladen von Sackstapeln als Ladungseinheiten 101 auf Transportmittel 203 und hier insbesondere Lastkraftwagen dient. Die Anlage umfasst ein Gebäude 202 mit mehreren Ebenen. Auf dem untersten Geschoss ist hier ein Lastkraftwagen als Transportmittel 203 zu erkennen, der eine Ladefläche 204 umfasst. Auf der Ladefläche 204 ist direkt hinter dem Führerhaus ein erster Sackstapel 101 bestehend aus einzelnen Säcken 102 abgelegt. Eingezeichnet ist der Sackstapel 101 so, dass er direkt und unmittelbar auf der Ladefläche 204 des Transportmittels 203 abgelegt ist.

Möglich ist es mit der vorliegenden Erfindung allerdings auch, Sackstapel 101 auf Ladungsträger 90 und insbesondere Paletten 90 abzusetzen, die auf einer Ladefläche 204 eines Transportmittels 203 zuvor abgelegt werden. Möglich ist auch eine gemischte Beladung direkt und auf Paletten. Dabei wird der reine Sackstapel (ohne Palette darunter) auf einer Palette abgelegt.

Diese auf den ersten Blick ungewöhnliche Vorgehensweise wird z. B. gewählt, wenn der Betreiber des Transportmittels über eigene Paletten verfügt oder z. B. nicht sicher stellen kann, dass an das Transportmittel übergebene Paletten wieder zurückgebracht werden. Dann ist es sinnvoll, die Sackstapel ohne Übergabe einer Palette entweder direkt auf der Ladefläche 204 des Transportmittels 203 abzulegen und die einzelnen Säcke später einzeln z. B. händisch zu entnehmen oder die Sackstapel auf von dem Transportmittel 203 z. B. mitgebrachte Paletten abzulegen, die auf der Ladefläche 204 z. B. grob vorpositioniert und mit dem Ladekopf 1 gezielt ausgerichtet werden.

Die Sackstapel als Ladungseinheiten 101 werden dem Transportmittel über eine Ladeeinrichtung 100 zugeführt. Die Ladeeinrichtung 100 ist mittels eines Wagens 104 auf Schienen im Obergeschoss des Gebäudes 202 verfahrbar. Die Ladeeinrichtung 100 umfasst einen Tragarm 23, der gegeneinander verschwenkbare Armglieder 24 und 25 umfasst. Am Ende ist ein Ladekopf 1 angebracht, der zwei Auflageeinrichtungen 2 und 3 umfasst, um gleichzeitig zwei Sackstapel 101 auf der Ladefläche 204 des Transportmittels 230 abzulegen. An dem Ladekopf 1 ist eine Mitnehmereinrichtung 70 ausgebildet, die nach unten über das untere Ende der Auflageeinrichtung 2 hervor steht. Über die Mitnehmereinrichtung 70 können Ladungsträger 90 wie Paletten auf der Ladefläche 204 des Lastkraftwagens 203 gezielt ausgerichtet werden.

Mit dem Ladekopf 1 ist es möglich, Sackstapel ohne unterliegende Palette z. B. direkt und unmittelbar auf einer Ladefläche 203 des Lastkraftwagens 204 abzusetzen. Möglich ist es aber auch, einen Sackstapel 101 auf einer auf der Ladefläche 203 des Lastkraftwagens 204 positionierten Palette 90 abzusetzen. Damit wird ein palettenloses Beladen einer Palette ermöglicht. Das ist beispielsweise dann sinnvoll oder gewünscht, wenn In-House-Paletten verwendet werden, die hochwertig ausgestaltet sind und die Produktionsanlagen nicht verlassen sollen. Wird beispielsweise ein zu beladener Lastkraftwagen später per Hand entladen, ist es nicht nötig, dass zuvor unter die Sackstapel Paletten positioniert werden.

Soll aber eine maschinelle Entladung erfolgen, ist es sinnvoll, Paletten auf der Ladefläche des Lastkraftwagens zu positionieren, um die Sackstapel auf den Paletten auf der Ladefläche abzulegen. Zur Unterstützung der Bedienperson kann ein Gitter auf die Ladefläche projiziert werde, um die Bedienperson (zur ungefähren Ausrichtung) bei der Ablage der Paletten zu unterstützen. Es muss kein exaktes Ausrichten erfolgen. Es genügt eine ungefähre Positionierung. Die genauere Positionierung kann mit dem Ladekopf 1 beim Beladen durchgeführt werden.

Dann kann anschließend ein maschinelles Entladen ermöglicht werden. Die zu verwendenden Paletten kann der Lastkraftwagen ja mitbringen oder auch separat gestellt bekommen. Für die weitere Verarbeitung und die Verteilung der Säcke aus den Sackstapeln ist es nicht nötig, hochwertige Paletten zu verwenden. Dazu können auch einfache und kostengünstige Paletten eingesetzt werden. Häufig auch Einwegpaletten.

Mit dem Ladekopf 1 ist es unter Zuhilfenahme der Mitnehmereinrichtung 70 möglich, die einzelnen Paletten 90 auf der Ladefläche 203 auszurichten. Dazu wird der Ladekopf direkt hinter einer auszurichtenden Palette 90 positioniert und leicht soweit abgesenkt, dass die Mitnehmereinrichtung 70 in einen Spalt 91 mit undefinierten Abstand zwischen zwei Paletten 90 eintaucht. Anschließend kann der Ladekopf entsprechend weit nach vorn bewegt werden und die Mitnehmereinrichtung 70 erfasst die Palette und richtet diese Palette 90 aus. Anschließend liegt ein definierter Spalt 92 zwischen zwei Paletten 90 vor.

Es ist möglich, dass eine Ausrichtung einer Palette 90 über die Mitnehmereinrichtung 70 erfolgt, während der Ladekopf 1 mit einem Sackstapel als Ladungseinheit 1 beladen ist. Möglich ist aber auch, dass alle Paletten 90 vor dem eigentlichen Ladevorgang ausgerichtet werden.

In Figur 1 ist die Ladeeinrichtung 100 oben links in der Übernahmestellung 210 abgebildet, in der ein Sackstapel 101 auf den Ladekopf 1 übergeben wird. Unten rechts ist die Ladeeinrichtung 100 in der Übergabestellung 211 abgebildet, wenn der Ladekopf 1 oder nachdem der Ladekopf 1 eine Ladungseinheit 101 an die Ladefläche 204 übergeben hat.

Figur 2 zeigt eine vergrößerte und stark schematische Seitenansicht einer unebenen Ladefläche eines Fahrzeugs 203, auf der hier drei Paletten 90 abgelegt sind. Zu erkennen ist, dass die mittlere Palette 90 durch den Ladekopf 1 zuvor gerade ausgerichtet wurde. Die Mitnehmereinrichtung 70 bzw. ein Mitnehmer 71 der Mitnehmereinrichtung 70 liegt mit der vorderen Kante 77 an der Palette 90 an, nachdem diese beispielsweise in Längsrichtung 1a des Ladekopfes 1 ausgerichtet wurde, sodass ein definierter Abstand 92 zu der davor angeordneten Palette 90 vorliegt.

Möglich ist es aber auch, dass der Ladekopf in die umgekehrte Richtung bewegt wird und mit der hinteren Kante 78 des Mitnehmers 71 die hier am weitesten rechts angeordnete Palette 90 nach hinten hin ausgerichtet wird. Entsprechend kann eine seitliche Ausrichtung erfolgen.

An dem Ladekopf 1 ist hier die Auflageeinrichtung 2 mit dem Auflageteil 4 zu erkennen. Das Auflageteil 4 ist hier in der nach vorn ausgefahrenen Stellung abgebildet, die beispielsweise eingenommen wird, wenn ein Sackstapel 101 darauf positioniert wird.

Beim Abgeben eines Sackstapels 101 an eine Palette 90 drückt der Niederhalter 81 der Trägereinrichtung 80 vorzugsweise von oben auf die dahinter angeordnete Palette 90, damit sichergestellt wird, dass beim Zurückziehen der Auflageteile 4, 5 diese Auflageteile nicht gegen die nachfolgende Palette anstoßen und diese so nach hinten wegschieben, was aufgrund der leicht unebenen Oberfläche einer Ladefläche 204 ansonsten passieren kann. Dieser Zustand ist in Figur 2 dargestellt.

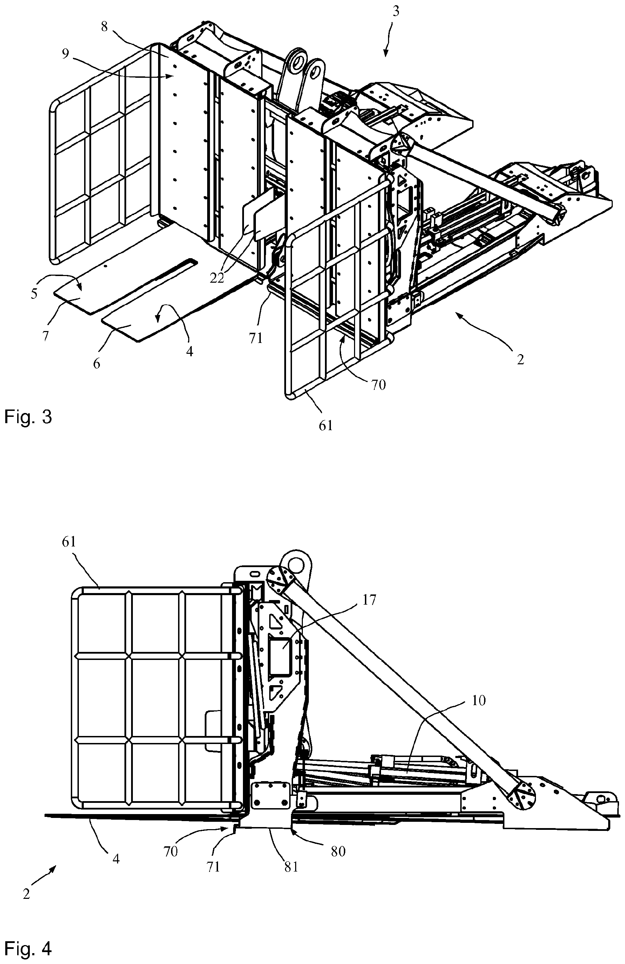

Figuren 3 und 4 zeigen eine perspektivische und eine Seitenansicht eines Ausführungsbeispiels eines Ladekopfes 1, wobei der Ladekopf zwei Auflageeinrichtungen 2 und 3 umfasst. Jede Auflageeinrichtung 2, 3 umfasst hier wiederum zwei weitgehend voneinander getrennte flächige Auflageteile 4, 5, an denen jeweils Stützflächen 6, 7 ausgebildet sind. Möglich ist es auch, dass eine Vielzahl an Auflageteilen vorgesehen ist, die insgesamt entsprechende Stützflächen zu Verfügung stellen. Zur Seite hin sind Seitenführungen 61 in Form von z. B. Seitengittern vorgesehen.

Der Ladekopf 1 umfasst eine Trägereinrichtung 80 und eine daran ausgebildete Quertraverse 17. An der Trägereinrichtung 80 sind die Auflageeinrichtungen 2 und 3 befestigt, sodass die Auflageteile 4, 5 der Auflageeinrichtungen 2, 3 in Längsrichtung 1a des Ladekopfes beweglich aufgenommen sind. An der Trägereinrichtung 80 ist eine Rückhalteeinrichtung 8 mit einer Rückhaltefläche 9 befestigt, mit der beim Zurückziehen der Auflageteile 4, 5 ein Zurückhalten einer Ladungseinheit 101 erfolgt. Dadurch kann auf einfache Art und Weise eine Ladungseinheit von den Auflageteilen 4, 5 definiert abgestreift werden.

Der Ladekopf 1 dient hier zur gleichzeitigen Aufnahme von zwei Ladungseinheiten 101, wobei hier eine Seitenverstellung der beiden Auflageeinrichtungen 2 und 3 zueinander ermöglicht wird. Dazu sind Sensoren 22 vorgesehen, die eine seitliche Orientierung der Ladungseinheiten 101 erfassen.

Im Ausführungsbeispiel gemäß der Figuren 3 und 4 ist an jeder Auflageeinrichtung 2, 3 jeweils eine Mitnehmereinrichtung 70 ausgebildet, die hier jeweils einen langgezogenen Mitnehmer 71 umfasst, der nach unten über die Auflageteile 4, 5 und auch die Trägereinrichtung 80 übersteht.

Zum Einfahren und Ausfahren der Auflageteile 4, 5 dient ein Rückzugsantrieb 10.

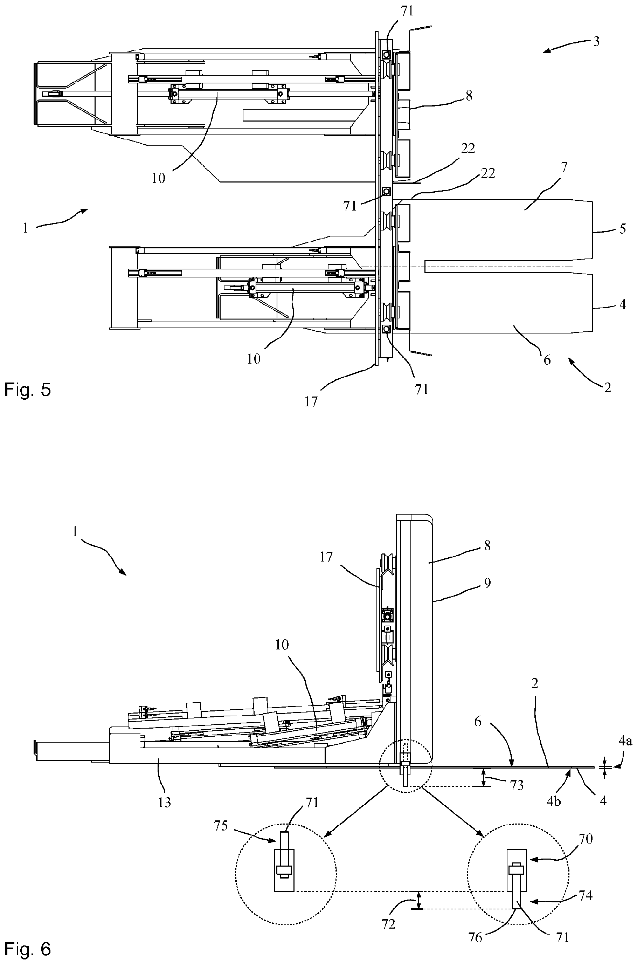

In den Figuren 5 und 6 ist ein weiteres Ausführungsbeispiel eines Ladekopfes 1 in der Draufsicht und einer schematischen Seitenansicht dargestellt. Auch hier verfügt der Ladekopf 1 über zwei Auflageeinrichtungen 2, 3 mit jeweils zwei Auflageteilen 4, 5, die entsprechende Stützflächen 6, 7 zur Verfügung stellen. Jede Auflageeinrichtung 2, 3 dient zur Aufnahme einer Ladungseinheit 101. Der Abstand der beiden Auflageeinrichtungen 2, 3 ist in seitlicher Richtung einstellbar. Auch hier dienen Sensoren 22 zur Erfassung der seitlichen Lage der Ladungseinheiten 101.

Zum Ein- und Ausfahren der Auflageeinrichtungen 2 und 3 können beispielsweise Doppelzylinder als Rückzugsantrieb 10 dienen.

Die Rückhalteeinrichtung 8 ist an der Trägereinrichtung 80 befestigt. Hier sind in die Trägereinrichtung 80 Mitnehmer 71 einer Mitnehmereinrichtung 70 integriert. Die Mitnehmer 71 sind, wie in Figur 6 zu erkennen, nach unten aus der Trägereinrichtung 80 ausfahrbar, sodass die Mitnehmer 71 nach unten überstehen. Damit können die Mitnehmer 71 zur Positionierung von Ladungsträgern oder beispielsweise Paletten dienen.

In der Mitnehmerposition 74, die als vergrößertes Detail auch unten rechts in Figur 6 noch einmal wiedergegeben ist, ragt eine untere Kante 76 des Mitnehmers 71 um den Überstand 72 nach unten aus der Trägereinrichtung 80 hervor. In dieser abgesenkten Stellung bzw. Mitnehmerposition 74 besteht ein Höhenversatz 73 zwischen der unteren Kante bzw. dem unteren Ende 4b des Auflageteils 4 und der unteren Kante 76 des Mitnehmers 71.

Vorzugsweise beträgt der Höhenversatz 73 wenigstens 5 cm und insbesondere auch mehr als 10 cm. Vorzugsweise ist der Höhenversatz 73 wenigstens fünfmal und insbesondere wenigstens zehnmal so groß wie eine Dicke 4a des Auflageteils 4. Vorzugsweise ist der Höhenversatz der Palettenhöhe angepasst und beträgt insbesondere 1/4 oder 1/3 oder 1/2 (jeweils +/- 20%) der Palettenhöhe.

Unten links ist die angehobene Stellung 75 des Mitnehmers 71 vergrößert dargestellt, wobei in der angehobenen Stellung 75 das untere Ende 76 des Mitnehmers 71 nicht nach unten über die Trägereinrichtung 80 hinaussteht.

In dem Ausführungsbeispiel gemäß der Figuren 5 und 6 erfolgt vorzugsweise eine automatische Verstellung der Mitnehmer 71 zwischen der Mitnehmerposition 74 und der angehobenen Stellung 75.

Weitere Details sind in den Ausführungsbeispielen der WO 2015/124750 A2 beschrieben und können hier identisch oder entsprechend realisiert sein.

Insgesamt stellt die Erfindung einen vorteilhaften Ladekopf zur Verfügung, mit dem eine Positionierung einer Trägereinrichtung 80 wie einer Palette auf einer Ladefläche 204 eines Transportmittels 203 erfolgen kann, bevor eine Ladungseinheit wie ein Sackstapel 101 auf dem auf der Ladefläche angeordneten Ladungsträger 90 abgelegt wird. Durch eine Positionierung der Ladungsträger auf der Ladefläche kann eine dichte Ablage von Sackstapeln auf der Ladefläche ermöglicht werden, ohne dass der Benutzer die Ladungsträger exakt positionieren muss.

Außerdem ist es mit dem erfindungsgemäßen Ladekopf auch möglich, Sackstapel direkt auf einer Ladefläche abzulegen, sodass auch ein palettenloser Betrieb möglich ist.

**Bezugszeichenliste:**

| | | | |
|---|---|---|---|
| 1 | Ladekopf | 73 | Höhenversatz |
| 1a | Längsrichtung | 74 | Mitnehmerposition, abgesenkte Stellung |
| 2 | Auflageeinrichtung | | |
| 3 | Auflageeinrichtung | 75 | angehobene Stellung |
| 4 | Auflageteil | 76 | untere Kante |
| 4a | Dicke | 77 | vordere Kante |
| 4b | unteres Ende | 78 | hintere Kante |
| 5 | Auflageteil | 80 | Trägereinrichtung |
| 6 | Stützfläche | 81 | Niederhalter |
| 7 | Stützfläche | 90 | Ladungsträger, Palette |
| 8 | Rückhalteeinrichtung | 91 | undefinierter Abstand |
| 9 | Rückhaltefläche | 92 | definierter Abstand |
| 10 | Rückzugsantrieb | 100 | Ladeeinrichtung |
| 13 | Führungseinrichtung, Laufrahmen | 101 | Ladungseinheit |
| | | 102 | Sack |
| 17 | Quertraverse, Trägereinrichtung | 104 | Wagen |
| | | 202 | Gebäude |
| 22 | Sensor | 203 | Transportmittel, Fahrzeug |
| 23 | Tragarm | | |
| 24 | Armglied | 204 | Ladefläche |
| 25 | Armglied | 210 | Übernahmestellung |
| 61 | Seitenführung | 211 | Übergabestellung |
| 70 | Mitnehmereinrichtung | | |
| 71 | Mitnehmer | | |
| 72 | Überstand | | |

## Patentansprüche

1. Ladekopf (1) zur Aufnahme und/oder Abgabe einer Ladungseinheit (101) bei einem Ladevorgang, umfassend eine Trägereinrichtung (80) und wenigstens eine daran aufgenommene Auflageeinrichtung (2, 3) mit wenigstens einem Auflageteil (4, 5) mit einer Stützfläche (6, 7), wobei die Auflageeinrichtung (2, 3) dazu vorgesehen und ausgebildet ist, die Ladungseinheit (101) wenigstens zeitweise bei dem Ladevorgang wenigstens von unten mittels der Stützfläche (6, 7) des Auflageteils (4, 5) zu stützen, wobei an der Trägereinrichtung (80) wenigstens eine Rückhalteeinrichtung (8) mit einer quer zu der Stützfläche (6, 7) des Auflageteils (4, 5) ausgerichteten Rückhaltefläche (9) aufgenommen ist, und wobei das Auflageteil (4, 5) des Ladekopfes (1) gegenüber der Rückhalteeinrichtung (8) beweglich ist, um durch ein Zurückbewegen des Auflageteils (4, 5) gegenüber der Rückhalteeinrichtung (8) die Ladungseinheit (101) von dem Ladekopf (1) abzugeben und an eine Ladefläche (204) eines separaten Transportmittels (203) zu übergeben,
wobei wenigstens eine Mitnehmereinrichtung (70) mit wenigstens einem Mitnehmer (71) an der Trägereinrichtung (80) vorgesehen ist, welche dazu geeignet und ausgebildet ist, bei einer Bewegung des Beladekopfes (1) einen transportablen Ladungsträger (90) auf der Ladefläche (204) des Transportmittels (203) auszurichten, auf dem eine Ladungseinheit abzusetzen ist,
um wahlweise die Ladungseinheit auf einem mit dem Beladekopf (1) auf der Ladefläche (204) des Transportmittels (203) ausgerichteten transportablen Ladungsträger (90) abzusetzen, **dadurch gekennzeichnet, dass** die Mitnehmereinrichtung insgesamt oder teilweise höhenverstellbar ist.

2. Ladekopf (1) nach Anspruch 1, wobei der Mitnehmer (71) in einer Mitnehmerposition (74) nach unten über die Auflageeinrichtung (2, 3) übersteht.

3. Ladekopf (1) nach einem der vorhergehenden Ansprüche, wobei eine untere Kante (76) des Mitnehmers (71) wenigstens um einen Höhenversatz (73) nach unten über das untere Ende (4a) des Auflageteils (4) übersteht, welcher wenigstes die dreifache oder fünffache oder zehnfache Dicke (4a) des Auflageteils (4, 5) beträgt.

4. Ladekopf (1) nach einem der vorhergehenden Ansprüche, wobei eine untere Kante (76) des Mitnehmers (71) wenigstens um 2 cm oder 5 cm oder 10 cm über das untere Ende (4b) des Auflageteils (4, 5) übersteht.

5. Ladekopf (1) nach dem vorhergehenden Anspruch, wobei der Mitnehmer (71) der Mitnehmereinrichtung (70) höhenverstellbar ist.

6. Ladekopf (1) nach dem vorhergehenden Anspruch, wobei die Mitnehmereinrichtung (70) an der Trägereinrichtung (80) aufgenommen ist.

7. Ladekopf (1) nach dem vorhergehenden Anspruch, wobei eine Länge des Mitnehmers (71) in Längsrichtung (1a) des Ladekopfes (1) kürzer als 10 cm oder 5 cm oder 3cm beträgt.

8. Ladekopf (1) nach einem der vorhergehenden Ansprüche, wobei an der Trägereinrichtung (80) ein Niederhalter (81) ausgebildet ist, der über das untere Ende (4b) des Auflageteils (4) nach unten übersteht.

9. Ladekopf (1) nach einem der vorhergehenden Ansprüche, wobei die Mitnehmereinrichtung (70) zwei fingerartige Mitnehmer (71) umfasst.

10. Ladekopf (1) nach einem der vorhergehenden Ansprüche, wobei die Mitnehmereinrichtung (70) wenigstens eine Mitnehmerkante (77, 78) umfasst.

11. Verfahren zum Beladen eines Transportmittels mit Ladungseinheiten (101) mittels eines Ladekopfes (1), wobei der Ladekopf (1) an einer Trägereinrichtung (80) gehalten wird und wobei eine Ladeeinheit auf einer Stützfläche (6, 7) eines Auflageteils (4, 5) einer Auflageeinrichtung (2, 3) positioniert ist und wobei das Auflageteil (4, 5) gegenüber einer an der Trägereinrichtung (80) aufgenommenen Rückhalteeinrichtung (8) zurückbewegt wird, um durch ein Zurückbewegen des Auflageteils (4, 5) gegenüber der Rückhalteeinrichtung (8) die Ladungseinheit (101) von dem Ladekopf (1) abzugeben und an eine Ladefläche (204) eines separaten Transportmittels (203) zu übergeben,
wobei vor der Abgabe der Ladungseinheit (101) mit einer an dem Ladekopf ausgebildeten Mitnehmereinrichtung (70), wahlweise ein transportabler Ladungsträger (90) auf einer Ladefläche des Transportmittels ausgerichtet wird, um wahlweise die Ladungseinheit auf einem mit dem Beladekopf (1) auf der Ladefläche (204) des Transportmittels (203) ausgerichteten transportablen Ladungsträger (90) abzusetzen, **dadurch gekennzeichnet, dass** die Mitnehmereinrichtung insgesamt oder teilweise höhenverstellbar ist.

12. Verfahren (1) nach dem vorhergehenden Anspruch, wobei die Mitnehmereinrichtung (70) insgesamt oder wenigstens ein Mitnehmer der Mitnehmereinrichtung (70) vor der Ausrichtung ausgefahren wird.

13. Verfahren (1) nach einem der beiden vorhergehenden Ansprüche, wobei der Ladungsträger (90) durch eine Bewegung des Ladekopfes (1) in Längsrichtung (1a) nach vorn geschoben und/oder zurückgezogen wird.

14. Verfahren (1) nach einem der drei vorhergehenden Ansprüche, wobei vor dem Zurückbewegen des Auflageteils (4, 5) und dem Beladen eines Ladungsträger (90) mit einer Ladungseinheit ein Niederhalter auf den nächsten Ladungsträger (90) abgesenkt wird.

15. Verfahren (1) nach einem der vier vorhergehenden Ansprüche, wobei die Ladungseinheit wahlweise z. B. direkt und unmittelbar auf der Ladefläche (204) des Transportmittels (203) abgesetzt wird.

## Claims

1. Loading head (1) for receiving and/or discharging a load unit (101) in a loading process, comprising a carrier device (80) and at least one bearing device (2, 3) received thereon having at least one bearing part (4, 5) with a support surface (6, 7), wherein the bearing device (2, 3) is provided and configured for supporting the load unit (101) at least from beneath at least temporarily during the loading process by means of the support surface (6, 7) of the bearing part (4, 5), wherein at least one retaining device (8) is received on the carrier device (80) having a retaining surface (9) oriented transverse to the support surface (6, 7) of the bearing part (4, 5), and wherein the bearing part (4, 5) of the loading head (1) is movable relative to the retaining device (8) in order to discharge the load unit (101) from the loading head (1) and to transfer it to a cargo area (204) of a separate transport means (203) by way of moving the bearing part (4, 5) backwards relative to the retaining device (8), wherein at least one engaging device (70) having at least one engaging dog (71) is provided on the carrier device (80), which is suitable and configured, during a movement of the loading head (1), to align a transportable load carrier (90) on the loading surface (204) of the transport means (203), on which a load unit is to be set down, in order to optionally set down the load unit onto a transportable load carrier (90) aligned with the loading head (10) on the loading surface (204) of the transport means (203),
**characterized in that** the engaging device is on the whole or partially height-adjustable.

2. The loading head (1) according to claim 1, wherein the engaging dog (71) protrudes downwardly beyond the bearing device (2, 3) in an engaging position (74).

3. The loading head (1) according to any of the preceding claims, wherein a lower edge (76) of the engaging dog (71) protrudes downwardly beyond the lower end (4a) of the bearing part (4) at least by a vertical offset (73) which is at least three times or five times or ten times the thickness (4a) of the bearing part (4, 5).

4. The loading head (1) according to any of the preceding claims, wherein a lower edge (76) of the engaging dog (71) protrudes beyond the lower end (4b) of the bearing part (4, 5) at least by 2 cm or 5 cm or 10 cm.

5. The loading head (1) according to the preceding claim, wherein the engaging dog (71) of the engaging device (70) is height-adjustable.

6. The loading head (1) according to the preceding claim, wherein the engaging device (70) is received on the carrier device (80).

7. The loading head (1) according to the preceding claim, wherein the length of the engaging dog (71) in the longitudinal direction (1a) of the loading head (1) is shorter than 10 cm or 5 cm or 3 cm.

8. The loading head (1) according to any of the preceding claims, wherein the carrier device (80) is configured with a hold-down device (81) which protrudes downwardly beyond the lower end (4b) of the bearing part (4).

9. The loading head (1) according to any of the preceding claims, wherein the engaging device (70) comprises two finger-like engaging dogs (71).

10. The loading head (1) according to any of the preceding claims, wherein the engaging device (70) comprises at least one engaging edge (77, 78).

11. Method for loading a transport means with load units (101) by means of a loading head (1), wherein the loading head (1) is retained on a carrier device (80), and wherein a load unit is positioned on a support surface (6, 7) of a bearing part (4, 5) of a bearing device (2, 3) and wherein the bearing part (4, 5) is moved backwards relative to a retaining device (8) received on the carrier device (80) to discharge the load unit (101) from the loading head (1) and to transfer it to the cargo area (204) of a separate transport means (203) by way of moving the bearing part (4, 5) backwards relative to the retaining device (8), wherein prior to discharging the load unit (101) an engaging device (70) configured on the loading head optionally aligns a transportable load carrier (90) on the cargo area of the transport means to optionally set down the load unit on a transportable load carrier (90) aligned with the loading head (1) on the cargo area (204) of the transport means (203), **characterized in that** the engaging device is on the whole or partially height-adjustable.

12. The method (1) according to the preceding claim, wherein the entire engaging device (70) or at least an engaging dog of the engaging device (70) is extended prior to alignment.

13. The method (1) according to any of the two preceding claims, wherein the load carrier (90) is pushed forwardly and/or retracted by way of a movement of the loading head (1) in the longitudinal direction (1a).

14. The method (1) according to any of the three preceding claims, wherein prior to moving the bearing part (4, 5) backwards and loading a load carrier (90) with a load unit, a hold-down device is lowered down on the next load carrier (90).

15. The method (1) according to any of the four preceding claims, wherein the load unit is optionally set down e.g. directly and immediately on the cargo area (204) of the transport means (203) .

## Revendications

1. Tête de chargement (1) destinée à recevoir et/ou à délivrer une unité de chargement (101) pendant une opération de chargement, comprenant un dispositif porteur (80) et au moins un dispositif d'appui (2, 3) logé sur celui-ci et ayant au moins un partie d'appui (4, 5) avec une surface de support (6, 7), dans lequel ledit dispositif d'appui (2, 3) est prévu et conçu pour supporter ladite unité de chargement (101) au moins temporairement pendant l'opération de chargement, au moins par le bas au moyen de la surface de support (6, 7) de la partie d'appui (4, 5), dans lequel au moins un dispositif de retenue (8) ayant une surface de retenue (9) alignée transversalement à la surface de support (6, 7) de la partie d'appui (4, 5) est logé sur le dispositif porteur (80), et dans lequel la partie d'appui (4, 5) de la tête de chargement (1) peut être déplacée par rapport au dispositif de retenue (8) afin de délivrer l'unité de chargement (101) de la tête de chargement (1) et de la faire passer à une surface de chargement (204) d'un moyen de transport (203) séparé, en déplaçant en arrière la partie d'appui (4, 5) par rapport au dispositif de retenue (8),
dans lequel au moins un dispositif d'entraînement (70) ayant au moins un entraîneur (71) est prévu sur le dispositif porteur (80), qui est adapté et conçu pour aligner, lors d'un mouvement de la tête de chargement (1), un porte-charge transportable (90) sur la surface de chargement (204) du moyen de transport (203) sur lequel doit être placée une unité de chargement,
pour placer au choix l'unité de chargement sur un porte-charge transportable (90) aligné au moyen de la tête de chargement (1) sur la surface de chargement (204) du moyen de transport (203),
**caractérisé par le fait que** le dispositif d'entraînement est entièrement ou partiellement réglable en hauteur.

2. Tête de chargement (1) selon la revendication 1, dans laquelle ledit entraîneur (71) dépasse vers le bas le dispositif d'appui (2, 3) dans une position d'entraîneur (74).

3. Tête de chargement (1) selon l'une quelconque des revendications précédentes, dans laquelle une arête inférieure (76) de l'entraîneur (71) dépasse vers le bas l'extrémité inférieure (4a) de la partie d'appui (4) d'au moins un décalage en hauteur (73) qui est au moins égal à trois ou à cinq ou à dix fois l'épaisseur (4a) de la partie d'appui (4, 5).

4. Tête de chargement (1) selon l'une quelconque des revendications précédentes, dans laquelle une arête inférieure (76) de l'entraîneur (71) dépasse l'extrémité inférieure (4b) de la partie d'appui (4, 5) au moins de 2 cm ou de 5 cm ou de 10 cm.

5. Tête de chargement (1) selon la revendication précédente, dans laquelle l'entraîneur (71) du dispositif d'entraînement (70) est réglable en hauteur.

6. Tête de chargement (1) selon la revendication précédente, dans laquelle le dispositif d'entraînement (70) est logé sur le dispositif porteur (80).

7. Tête de chargement (1) selon la revendication précédente, dans laquelle une longueur de l'entraîneur (71) dans la direction longitudinale (1a) de la tête de chargement (1) est inférieure à 10 cm ou à 5 cm ou à 3 cm.

8. Tête de chargement (1) selon l'une quelconque des revendications précédentes, dans laquelle sur le dispositif porteur (80) est réalisé un dispositif de maintien vers le bas (81) qui dépasse vers le bas l'extrémité inférieure (4b) de la partie d'appui (4).

9. Tête de chargement (1) selon l'une quelconque des revendications précédentes, dans laquelle le dispositif d'entraînement (70) comprend deux entraîneurs (71) de type doigt.

10. Tête de chargement (1) selon l'une quelconque des revendications précédentes, dans laquelle le dispositif d'entraînement (70) comprend au moins une arête d'entraînement (77, 78).

11. Procédé pour charger un moyen de transport d'unités de chargement (101) au moyen d'une tête de chargement (1), dans lequel la tête de chargement (1) est maintenue sur un dispositif porteur (80) et dans lequel une unité de chargement est positionnée sur une surface de support (6, 7) d'une partie d'appui (4, 5) d'un dispositif d'appui (2, 3) et dans lequel la partie d'appui (4, 5) est déplacée en arrière par rapport à un dispositif de retenue (8) logé sur le dispositif porteur (80) afin de délivrer l'unité de chargement (101) de la tête de chargement (1) et de la faire passer à une surface de chargement (204) d'un moyen de transport (203) séparé, en déplaçant en arrière la partie d'appui (4, 5) par rapport au dispositif de retenue (8),
dans lequel, avant de délivrer l'unité de chargement (101) au moyen d'un dispositif d'entraînement (70) réalisé sur la tête de chargement, un porte-charge transportable (90) est aligné au choix sur une surface de chargement du moyen de transport pour, au choix, placer l'unité de chargement sur un porte-charge transportable (90) aligné au moyen de la tête de chargement (1) sur la surface de chargement (204) du moyen de transport (203),
**caractérisé par le fait que** le dispositif d'entraînement est entièrement ou partiellement réglable en hauteur.

12. Procédé (1) selon la revendication précédente, dans lequel le dispositif d'entraînement (70) est sorti dans son ensemble ou au moins un entraîneur du dispositif d'entraînement (70) est sorti avant l'alignement.

13. Procédé (1) selon l'une quelconque des deux revendications précédentes, dans lequel le porte-charge (90) est poussé vers l'avant et/ou retiré par un mouvement de la tête de chargement (1) dans la direction longitudinale (1a).

14. Procédé (1) selon l'une quelconque des trois revendications précédentes, dans lequel avant que la partie d'appui (4, 5) soit déplacée en arrière et qu'un porte-charge (90) soit chargé d'une unité de chargement, un dispositif de maintien vers le bas est abaissé sur le porte-charge (90) suivant.

15. Procédé (1) selon l'une quelconque des quatre revendications précédentes, dans lequel l'unité de chargement est placée au choix par exemple directement et immédiatement sur la surface de chargement (204) du moyen de transport (203).
